# EUROPEAN PATENT SPECIFICATION

(11) **EP 0 658 899 B1**
(45) Date of publication and mention of the grant of the patent: **16.10.2002**
(21) Application number: 94309276.7
(22) Date of filing: 12.12.1994
(51) Int. Cl.: G11B 27/032, G11B 27/028, H04N 5/262

(54) **Video editing apparatus**
Videoschnittgerät
Appareil d'édition vidéo

(30) Priority: 14.12.1993 JP 31378893
(43) Date of publication of application: 21.06.1995
(73) Proprietor: SONY CORPORATION, Tokyo (JP)
(72) Inventor: Ito, Yuji, c/o Intellectual Property Division, Shinagawa-ku, Tokyo 141 (JP); Onoue, Yoichi, c/o Intellectual Property Div., Shinagawa-ku, Tokyo 141 (JP)
(74) Representative: DeVile, Jonathan Mark, Dr.

(56) References cited:
- EP-A- 0 450 471
- EP-A- 0 586 248
- DE-U- 9 100 888
- US-A- 4 750 050
- RADIO FERNSEHEN ELEKTRONIK, vol. 42, no. 2, February 1993, BERLIN DE, pages 16-19, XP000420737 "MULTIMEDIA,Videobearbeitung am PC"

## Description

This invention relates to video editing apparatus. More particularly, but not exclusively, the invention relates to video editing apparatus for use in editing a video tape under the condition that a plurality of VTRs (video tape recorders), such as video tape recording and reproducing apparatus, are connected thereto.

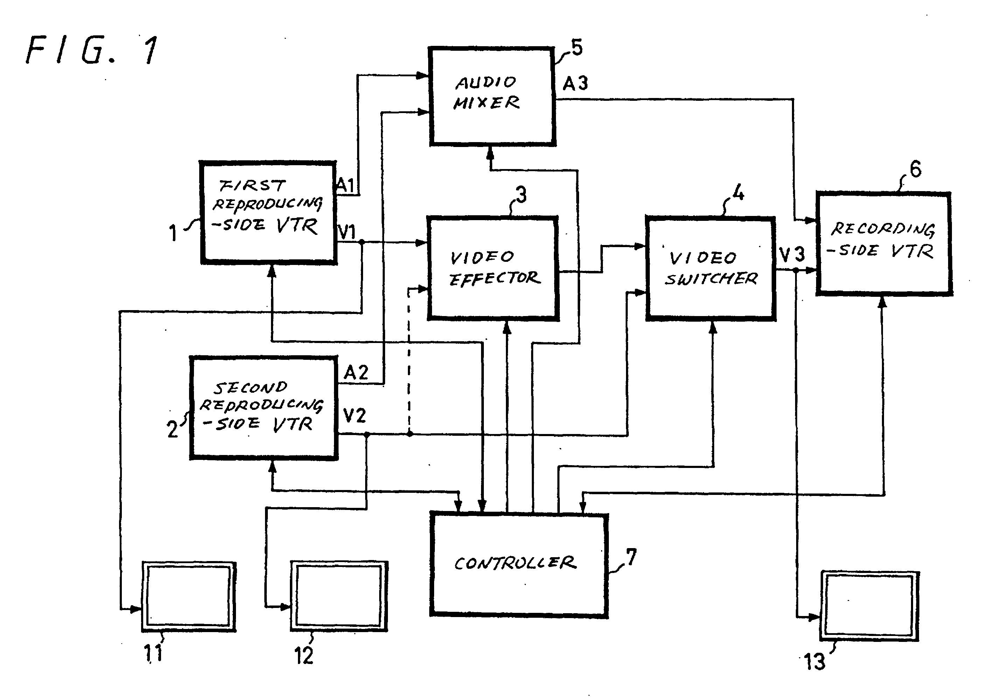

When video signals reproduced from a plurality of VTRs are edited and recorded on a video tape of a single VTR, a video editing apparatus having a system configuration as shown in FIG. 1 of the accompanying drawings can be used. In FIG. 1, reference numerals 1 and 2 designate first and second reproducing-side VTRs. A timing at which the first and second reproducing-side VTRs 1, 2 reproduce video signals from video tapes is controlled by a controller 7 which controls the whole of the editing operation of the video editing apparatus.

A video signal V1 output from the first reproducing-side VTR 1 is supplied to a video effector 3. The video effector 3 carries out processing for adding a video special effect to a picture (referred to hereinafter as "effect processing") under the control of the controller 7 when necessary. A video signal output from the video effector 3 is supplied to a video switcher 4. A video signal V2 output from the second reproducing-side VTR 2 is supplied to the switcher 4.

The video switcher 4 outputs an edited video signal V3 of one system by properly switching the video signals of two systems under the control of the controller 7 and supplies the video signal V3 to a recording-side VTR 6, thereby the video signal V3 being recorded on a video tape. Recording operation in the recording-side VTR 6 is carried out under the control of the controller 7. Depending on the system configuration, as shown by a dotted line in FIG. 1, the video signal V1 output from the second reproducing-side VTR 2 is also supplied to the video effector 3 in which the video signals V1, V2 of the two systems are synthesized.

The video signal V1 output from the first reproducing-side VTR 1 is supplied to and displayed on a first sub-monitor 11. The video signal V2 output from the second reproducing-side VTR 2 is supplied to and displayed on a second sub-monitor 12. Further, the video signal V2 output from the video switcher 4 is supplied to and displayed on a main monitor 13.

An audio signal A1 output from the first reproducing-side VTR 1 and an audio signal A2 output from the second reproducing-side VTR 2 are supplied to an audio mixer 5 in which the audio signals A1, A2 of the two systems are mixed to provide an audio signal A3 of one system under the control of the controller 7. The resultant audio signal A3 is supplied to the recording-side VTR 6, thereby being recorded on the video tape.

Time code data recorded on the video tapes loaded on the first and second reproducing-side VTRs 1, 2 and the recording-side VTR 6 are transmitted to the controller 7 and reproducing operation and recording operation of the VTRs 1, 2 and 6 are controlled by the controller 7 after reproducing positions and recording position were judged based on the time code data supplied thereto. Therefore, the VTRs 1, 2, 6 and the controller 7 are connected so that they can communicate with one another in a two-way fashion. In this connection, a standardized communication interface, such as RS-232C is used.

In the processing in the video effector 3, the video switcher 4 and the audio mixer 5, when the time code of the corresponding VTR becomes the code of cue, the controller 7 transmits control instructions for starting processing to the video effector 3, the video switcher 4 and the audio mixer 5 so that the video effector 3, the video switcher 4 and the audio mixer 5 start processing.

The video effector 3, the video switcher 4, the audio mixer 5 and the controller 7 are generally composed of separate devices each incorporating a controller formed of a microcomputer. The controller is not limited to the microcomputer and may be formed of a personal computer.

When the editing system thus arranged is used, edited video program can be recorded on the video tape loaded on the recording-side VTR 6 based on video sources recorded on the video tapes loaded on the two reproducing-side VTRs 1 and 2.

In the case of the editing system, the controller 7 controls the reproducing-side VTRs 1, 2 and the recording-side VTR 6 based on the time codes corresponding to the video tape transport positions supplied thereto from the respective VTRs 1, 2 and 6. Therefore, a video transmission timing or the like can be fine controlled at the frame unit. However, it is frequently observed that processing timing of the video effector 3, the video switcher 4 and the audio mixer 5 are controlled with a small displacement from original cues.

Specifically, let it be assume that the video effector 3 processes the reproduced picture in a special video effect processing fashion to provide a mosaic picture when the video signal reproduced from the first reproducing-side VTR 1 becomes a predetermined time code (referred to hereinafter as a first cue). At that time, if it is determined by the controller 7 that the reproduced portion of the first reproducing-side VTR becomes the time code of the cue 1, then the controller 7 supplies an effect processing starting control instruction to the video effector 3. When the controller in the video effector 3 receives this control instruction, the controller in the video effector 3 energizes an image processor circuit provided within the video effector 3 to be set in the corresponding state to start mosaic image processing. Until the video effector 3 starts the processing in response to the control instruction supplied to the controller provided within the video effector 3 after the controller 7 judged the time code supplied thereto from the VTR 1, it takes a lot of time because there are two stages of the control units of the controller 7 which controls the whole of the editing and the controller provided within the video effector 3. As a result, a timing at which the video effector 3 starts the effect processing is displaced by about several frames from the time code of the cue 1.

The processing timing in the video switcher 4 and the audio mixer 5 also are processed similarly so that the processing in the video switcher 4 and the audio mixer 5 are displaced from the original cue.

It is not preferable that the cue is displaced as described above. Therefore, it is desired that a video editing system which can carry out the editing with high accuracy is developed.

The prior art document Radio Fernsehen Elektronic, vol. 42, no. 2, February 1993, Berlin DE, pages 16-19, XP000420737 "MULTIMEDIA, Videobearbeitung am PC" describes a PC card that facilitates digital editing of analog S-video and composite video material. The PC card comprises analog to digital conversion means, time base correction means, memory means for storing image frames, a digital effect modules for each input channel, a digital keyer and mixer and a digital to analog converter. The mixing and keying (including chroma keying) is performed in the digital domain.

According to an aspect of the present invention, there is provided A video/audio signal processing apparatus for processing a first source analog video signal and a second source analog video signal and a plurality of audio input signals, the apparatus comprising:
an analog to digital conversion means operable to convert said first source analog video signal and said second source analog video signal into a digital representation to produce a first source digital video signal and a second source digital video signal respectively;
a first effect processing means for performing a first special effect process to said first source digital video signal to generate a first processed digital video signal in response to a first effecting control signal that controls a timing of said first special effect process;
a second effect processing means for performing a second special effect process to said second source digital video signal to generate a second processed digital video signal in response to a second effecting control signal that controls a timing of said second special effect process;
a digital to analog conversion means operable to convert said first processed digital video signal and said second processed digital video signal into an analog representation to produce a first processed analog video signal and a second processed analog video signal respectively;
a switching means for switching said first processed analog video signal and said second processed analog video signal;
an audio mixing means for mixing and outputting audio signals selected from said audio input signals;
a memory means for storing a plurality of edit processing data indicating a timing of said first special effect process and said second special effect process; and
a control means for controlling said first effect processing means, said second effect processing means, said switching means and said audio mixing means, wherein said control means comprises:
   a) receiving means for receiving a first source time code information corresponding to said first source video signal, a second source time code information corresponding to said second source video signal, and said plurality of edit processing data; and
   b) generating means for generating said first effecting control signal at the time of matching with said first source time code information and said edit processing data indicating a timing of said first effect process, and said second effecting control signal at the time of matching with said second source time code information and said edit processing data indicating a timing of said second effect process.

An embodiment of the invention described hereinbelow provides a video editing apparatus which can carry out editing with high accuracy at the frame unit.

The invention will now be further described, by way of illustrative and non-limiting example, with reference to the accompanying drawings, in which:
FIG. 1 is a block diagram showing an arrangement of an editing system;
FIG. 2 is a block diagram showing an arrangement of a video system of a video editing apparatus according to an embodiment of the invention;
FIG. 3 is a block diagram showing an arrangement of an audio system of the video editing apparatus according to the embodiment of the invention;
FIG. 4 is a block diagram showing an arrangement of a control system of the video editing apparatus according to the embodiment of the invention; and
FIG. 5 is a plan view showing an outer face of the video editing apparatus according to the embodiment of the invention.

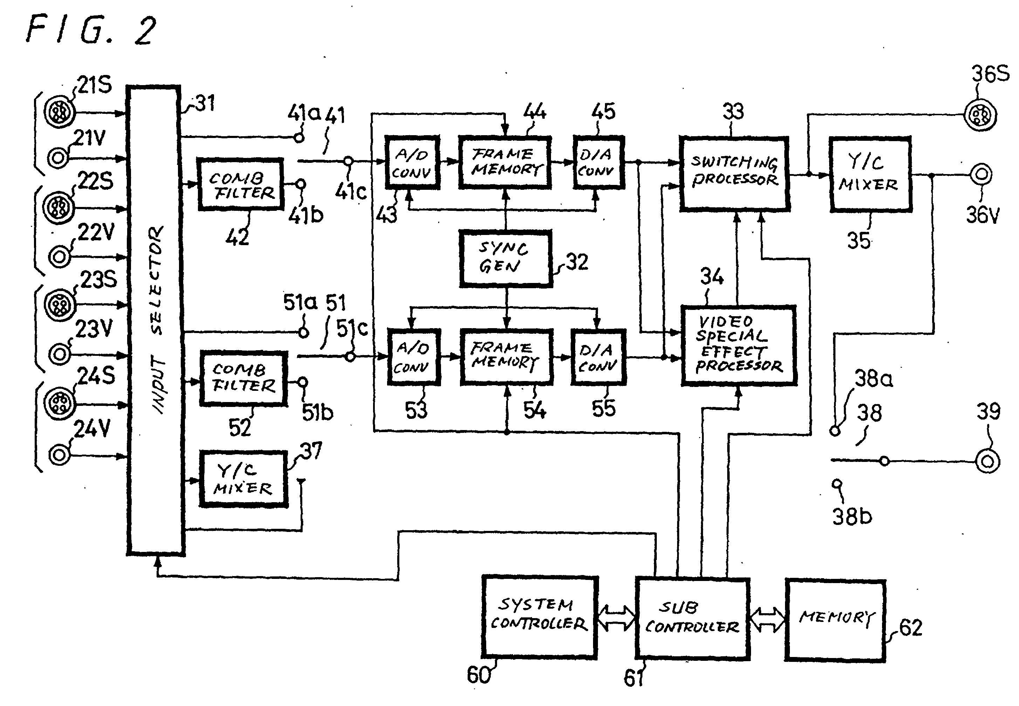

A video editing apparatus according to an embodiment of the invention will now be described with reference to FIGS. 2 to 5.

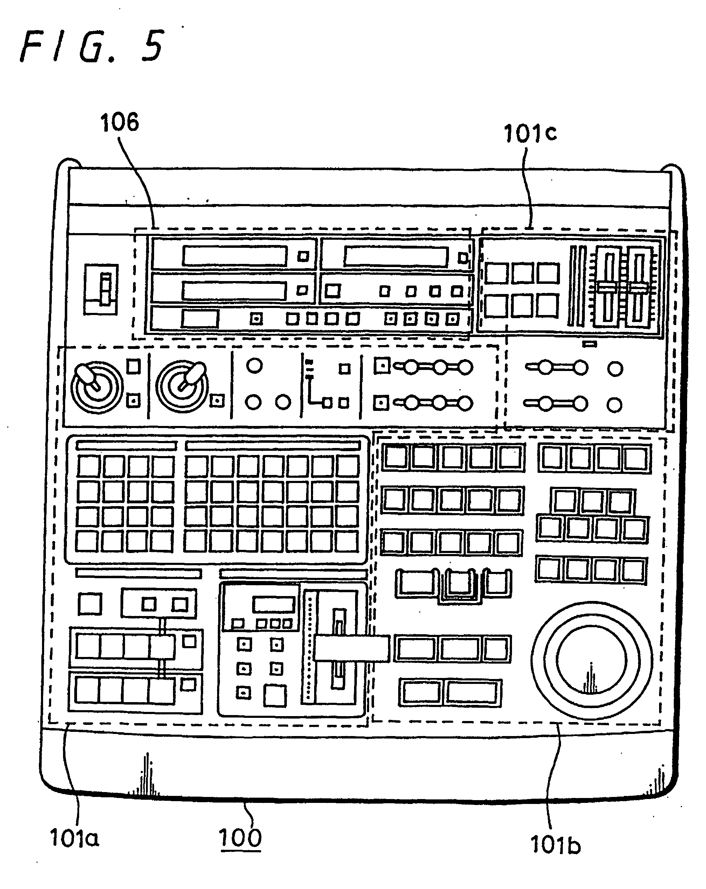

According to this embodiment, a video editing apparatus has an effector function to add a video special effect to a video signal supplied thereto, a switcher function to switch a plurality of video signals, an audio mixer function to change the mixed condition of a plurality of input audio signals, and an edit controller function to control operation of VTRs connected thereto. As shown in FIG. 5, a video editing apparatus 100 includes a video switcher unit 101a, a VTR control unit 101b, an audio mixer unit 101c and a time code display unit 106 integrally disposed on its front surface.

An arrangement of a video signal processing circuit system of this video editing apparatus will be described with reference to FIG. 2. In FIG. 2, reference numerals 21S, 22S, 23S and 24S respectively depict first, second, third and fourth S video input terminals to which luminance/chroma separated video signals (referred to hereinafter as "Y/C separated video signals") are supplied. The first and second S video input terminals 21S, 22S are connected to video output terminals of first and second reproducing-side VTRs. The third S video input terminal 23S is connected to a video output terminal of the second reproducing-side VTR, and the fourth S video input terminal 23S is an external video input terminal.

First, second, third and fourth composite video input terminals 21V, 22V, 23V and 24V are provided in parallel to the S video input terminals 21S, 22S, 23S and 24S. The composite video input terminals 21V to 24V are terminals to which the first reproducing side VTR, the second reproducing-side VTR and the recording-side VTR are connected and an external input terminal. For each equipment, any one of the S video input terminal and the composite video input terminal is used.

Video signals supplied to the S video input terminals 21S to 24S and video signals supplied to the composite video input terminals 21V to 24V are supplied to an input selector 31. The input selector 60 can select input video signals under the control of instruction supplied thereto from a system controller 60 through a sub controller 61, i.e., can select video signals supplied to a first processing system (referred to hereinafter as "A bus"), video signals supplied to a second processing system (referred to hereinafter as "B bus") and monitor video signals. The A bus video signal, the B bus video signal and the monitor video signal can be separately selected and all of the same video signals can be selected.

The Y/C separated video signal selected to the A bus is supplied to one fixed contact 41a of a change-over switch 41. The composite video signal selected to the A bus is supplied to a comb filter 42, in which it is separated to provide a luminance component and a chroma component which constitute a Y/C separated video signal. The Y/C separated video signal is supplied to the other fixed contact 41b of the change-over switch 41. When a movable contact 41c of the change-over switch 41 is changed in position, there can be selected the Y/C separated video signal supplied thereto from the S video input terminal and the Y/C separated composite video signal supplied thereto from the composite video signal input terminal.

Similarly, the Y/C separated video signal selected to the bus B is supplied to one fixed contact 51a of a change-over switch 51. The composite video signal selected to the B bus is supplied to a comb filter 52, in which it is separated to provide a luminance component and a chroma component which constitute a Y/C separated video signal. This Y/C separated video signal is supplied to the other fixed contact 51b of the change-over switch 51. When a movable contact 51c of the change-over switch 51 is changed in position, there can be selected the Y/C separated video signal supplied thereto from the S video input terminals and the composite luminance/chroma separated video signal supplied thereto from the composite video input terminals.

Accordingly, the change-over switches 41 and 51 are changed in position, whereby both of the A bus and the B bus can cope with any one of the cases in which the input video signals are the Y/C separated video signal and the composite video signals.

In the A bus, the video signal (Y/C separated video signal) selected by the change-over switch 41 is converted by an analog-to-digital (A/D) converter 43 to digital data and memorized in a frame memory 44. The frame memory 44 carries out effect processing in which video special effect is added to the video signal by the change of the writing state and the reading state of the video signal in and from the memory. Specifically, the frame memory 44 carries out the video special effect so that a picture is separated into a plurality of pictures to provide a multi-picture and a picture is formed as a mosaic picture. It is needless to say that the video signal is not processed by the video special effect processing but read out from the frame memory 44.

The video data read out from the frame memory 44 is supplied to a digital-to-analog (D/A) converter 45, in which it is converted into an analog video signal. The analog video signal is supplied to a switching processor 33 and a video special effect processor 34. The A/D converter 43, the frame memory 44 and the D/A converter 45 are operated to effect digital conversion, memory control and analog conversion based on a synchronizing (sync) signal supplied thereto from a sync signal generator 32. Video data is read out from the frame memory 44 at a stable timing based on the sync signal supplied thereto from the sync generator 32 to provide a stable video signal having no timebase fluctuation. Thus, the frame memory 44 can function as a time base corrector.

Also in the B bus, the video signal (Y/C separated video signal) selected by the change-over switch 51 is converted by an A/D converter 53 to digital data and stored in an effect processing frame memory 54. The video data read out from the frame memory 54 is supplied to a D/A converter 55, in which it is converted to an analog video signal. This analog video signal is supplied to the switching processor 33 and the video special effect processor 34. The A/D converter 53, the frame memory 54 and the D/A converter 55 are operated to effect digital conversion, memory control and analog conversion based on the sync signal supplied thereto from the sync generator 32. Video data is read out from the frame memory 44 at a stable timing based on the sync signal supplied thereto from the sync generator 32 to provide a stable video signal having no timebase fluctuation. Thus, the frame memory 54 can function as a time base corrector. In the B bus, it is needless to say that the video signal is processed in video special effect fashion but directly read out from the frame memory 54.

The frame memories 44, 54 in the A bus and the B bus carry out the effect processing under the control of instruction supplied thereto from the system controller 60 through the sub controller 61.

The switching processor 33 functions as a video switcher for switching the video signal supplied thereto from the A bus and the video signal supplied thereto from the Bus to provide a video signal of one system. In this case, various switching processings are carried out under the control of the sub controller 61 based on instructions supplied from the system controller 60, i.e., various switching processing, such as an instant switching to momentarily switch one system to the other system, a switching processing in which a video signal of one system is faded-in and a video signal of other system is faded-in and a switching processing in which video signals of both systems are synthesized and then gradually switched.

The video special effect processor 34 detects a component of a particular color from a video signal supplied thereto and supplies detected data for changing the color component portion to the switching processor 34 so that a particular color of the video signal output from the switching processor 33 is changed or that a video signal of other system is synthesized to the portion of the particular color. Processing in the video special effect processor 34 is carried out under the control of the sub controller 61 based on instructions supplied from the system controller 60.

The video signal of one system output from the switching processor 33 is output from an S video output terminal 36S and supplied to the luminance/chroma mixer 35 and thereby supplied to a composite video output terminal 36V as a composite video signal. A recording signal input terminal of the recording-side VTR is connected to any one of the S video output terminal 36S and the composite video output terminal 36V.

The composite video signal output from the luminance/chroma mixer 35 is supplied to one fixed contact 38a of a change-over switch 38. A monitor video signal selected and output from the input selector 31 is supplied to the other fixed contact 38b of the change-over switch 38. In this case, when the monitor video signal output from the input selector 31 is the Y/C separated video signal, such Y/C separated video signal is supplied through the luminance/chroma mixer 35 to the change-over switch 38.

The change-over switch 38 switches the edited video signal supplied to the output terminal 36V side and the non-edited video signal obtained at the input selector 31 and supplies a video signal thus selected to the monitor output terminal 39. The monitor output terminal 39 is connected with a monitor receiver (not shown) on which a picture based on the video signal output from the output terminal 39 is displayed.

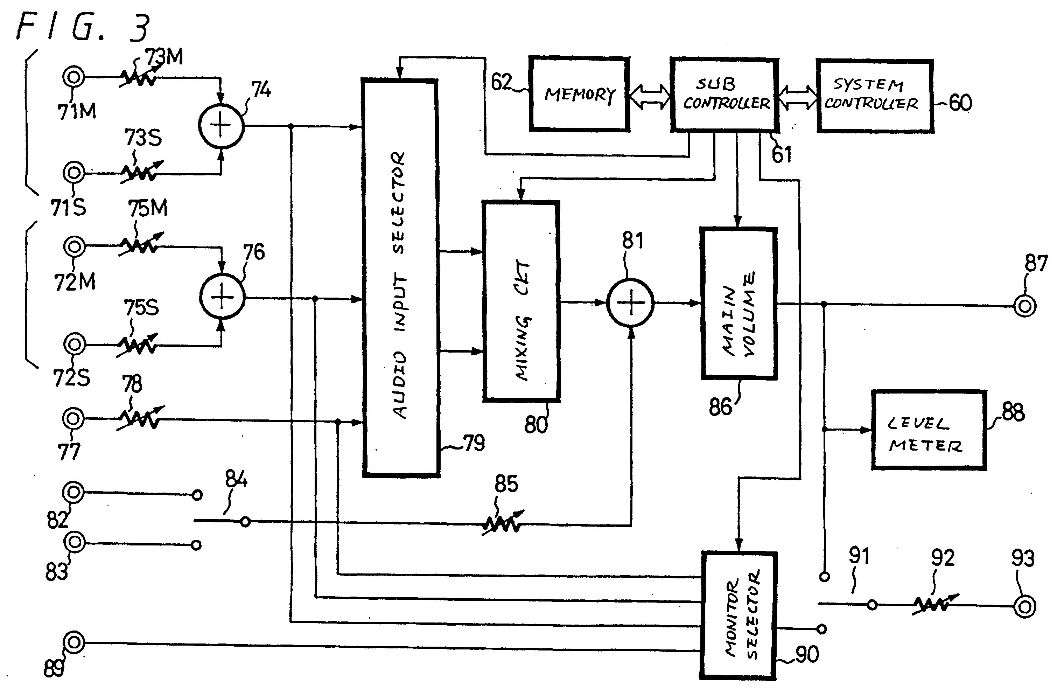

An arrangement of an audio signal processing circuit system will be described with reference to FIG. 3. In FIG. 3, reference symbols 71M and 72M depict first and second main audio signal input terminals, respectively. Reference symbols 71S and 72S depict first and second sub audio signal input terminals, respectively. The first main audio signal input terminal 71M and the first sub audio signal input terminal 71S are connected to the main audio output terminal and the sub audio output terminal of the first reproducing-side VTR, respectively. The second main audio signal input terminal 72M and the second sub audio signal input terminal 72S are connected with the main audio output terminal and the sub audio output terminal of the second reproducing-side VTR.

An audio signal developed at the first main audio signal input terminal 71M and the audio signal developed at the first sub audio signal input terminal 71S are mixed by a mixer 74 through volumes 73M, 73S. An audio signal developed at the second main audio signal input terminal 72M and the audio signal developed at the second sub audio signal input terminal 72S are mixed by a mixer 74 through volumes 75M, 75S. Depending on the adjustment state of the volumes 73M, 73S, 75M and 75S, it is possible to output only any one of the audio signal of the main audio signal and the sub audio signal. The audio signal thus mixed is supplied to an audio input selector 79.

In FIG. 3, reference numeral 77 depicts a first external audio input terminal. An audio signal supplied to the first external audio input terminal 77 is supplied through a volume 78 to the audio input selector 79. The audio input selector 79 selects the audio signals of the two systems under the control of the sub controller 61 based on the instruction supplied from the system controller 60. The audio signal of the two systems thus selected are supplied to a mixing circuit 80. One of the audio signals of the two systems is referred to as "A bus" and the other audio signal is referred to as "B bus". The mixing circuit 80 mixes the audio signals of the two systems with a predetermined mixing ratio under the control of the sub controller 61 based on the instruction supplied from the system controller 60. The audio signal thus mixed by the mixing circuit 80 is supplied to a mixer 81.

Reference numeral 82 designates a microphone audio input terminal and reference numeral 83 designates a second external audio input terminal. Audio signals developed at the two input terminals 82, 83 are selected by a change-over switch 84. The audio signal selected by the change-over switch 84 is supplied through a volume **85** to the mixer **81,** in which it is mixed to the audio signal output from the mixing circuit 80. The audio signal mixed by the mixer 81 is supplied to a volume 86. The volume 86 adjusts the audio signal level under the control of the sub controller 61 based on instruction from the system controller 60.

The audio signal whose level was adjusted by the main volume 86 is supplied to the audio signal output terminal 87. The audio signal output terminal 87 is connected with the recording audio signal input terminal of the recording-side VTR.

The audio signal output from the main volume 86 is supplied to a level meter 88 and the level meter 88 displays the audio level. The audio signal output from the main volume 86 is supplied to an audio monitor change-over switch 91.

The output audio signal from the mixer 74 which is supplied with the audio signals from the first main and sub audio signal input terminals 71M and 71S, the output audio signal from the mixer 76 which is supplied with the audio signals from the second main and sub audio signal input terminals 72M, 72S and the signal which results from processing the audio signal developed at the first external audio input terminal 77 by the volume 78 are supplied to an audio monitor selector 90. In FIG. 3, reference numeral 89 designates an audio signal input terminal to which an audio signal reproduced from the recording-side VTR is supplied. An audio signal obtained at this audio signal input terminal 89 also is supplied to the audio monitor selector 90.

The audio monitor selector 90 selects any of the audio signal under the control of the sub controller 61, and supplies the audio signal thus selected to the audio monitor change-over switch 91. The audio monitor change-over switch 91 selects any one of the edited audio signal supplied thereto from the main volume 86 side and the input audio signals supplied thereto from the respective input terminal sides. The audio signal thus selected is output from the monitor audio output terminal 93 through the volume 92.

Two channels of the left channel and the right channel are prepared as the paths of the audio signals in actual practice, and the stereo audio signal can be processed.

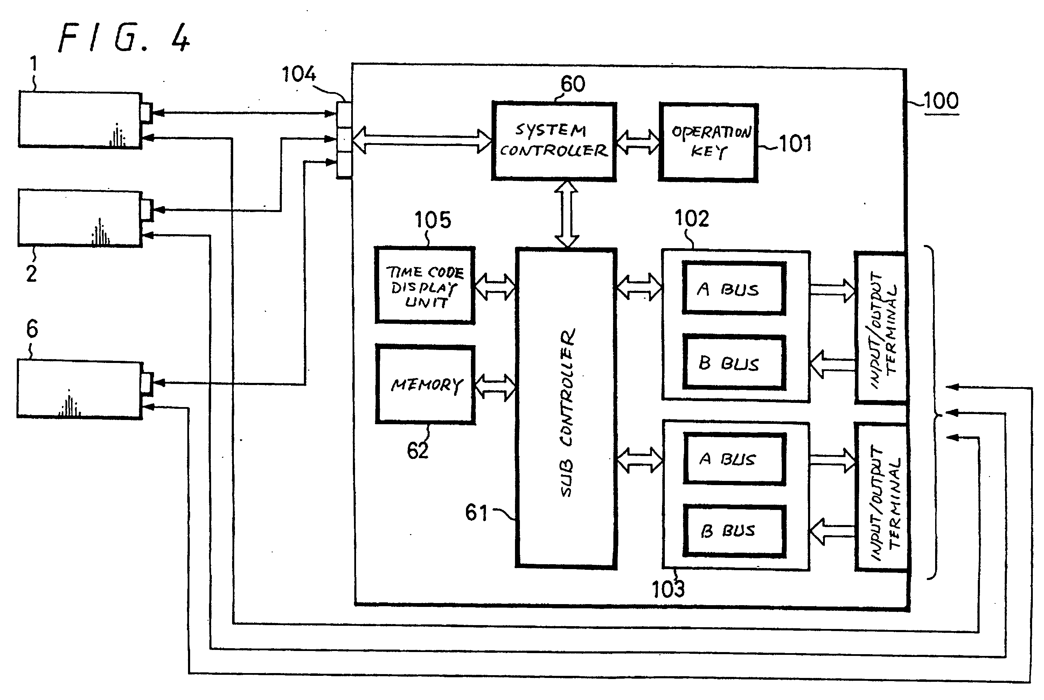

An arrangement of a control system of this editing apparatus will be described with reference to FIG. 4. As shown in FIG. 4, the editing apparatus according to this embodiment includes two reproducing-side VTR 1 and VTR 2 and the recording-side VTR 6. The video system is connected by using video input terminals and video output terminals shown in FIG. 2 and the audio system is connected by using audio input terminals and audio output terminals shown in FIG. 3.

Control terminals of the respective VTRs 1, 2 and 6 are connected to a communication terminal 104 of an editing apparatus 100, and the VTRs 1, 2 and 6 can communicate with the system controller 60 of the editing apparatus 100 through the communication terminal 104 in a two-way fashion. In this case, control instructions for controlling recording operation and reproducing operation are transmitted from the system controller 60 to the VTRs 1, 2 and 6. Data (status data) representing currently operated state of the VTR and time code data representing current tape transport position (recording position and reproducing position) are transmitted from the VTRs 1, and 6 to the system controller 60.

The system controller 60 is supplied with operation data of operation key 101 (keys disposed on the front wall of the apparatus shown in FIG. 5) of this editing apparatus 100. A time code display unit 106 is connected to the sub controller 61 connected to the system controller 60. Time code data (hour, minute, second and data of frame number) of the three VTRs supplied through the communication terminal 104 to the system controller 60 are supplied through the sub controller 61 to the time code display unit 105. Thus, the time code display unit 105 displays time codes of the three VTRs.

The sub controller 61 is connected with a memory 62 which memorizes data (data representing type of edit and data representing edit timing) of edit processing carried out by this video editing apparatus. The video editing apparatus according to the present invention can carry out automatic editing based on data memorized in this memory 62. In this case, in the memory 62, edit timing data are memorized in the form of time code data of each VTR.

Operation data from the operation key 101 is supplied through the system controller 60 to the sub controller 61, whereby the A bus and the B bus within the video signal-system block 102 and the A bus and the B bus in the audio-system block 103 can be carried out based on the operation of the operation key 101. Control carried out within the video-system block 102 and control carried out within the audio-system block 103 are those concerning the various edit processings described with reference to FIGS. 2 and 3.

According to this embodiment, when edit processing is carried out on the basis of the data stored in the memory 62, the current time codes supplied from the respective VTRs 1, 2, 6 and the time codes of cue memorized in the memory 62 are compared with one another by the sub controller 61. When the time codes are coincident with each other, the sub controller 61 directly control the circuits within the video-system block 102 and the circuit within the audio-system block 103. Specifically, the memory 62 has time codes of edit-in and edit-out of video source reproduced by the reproducing-side VTR and time codes of edit-in and edit-out of video source recorded by the recording-side VTR as time code data. When the currently supplied time codes from the VTRs 1, 2 and 6 agreed with time codes of edit-in and edit-out thus stored, the pictures of the A bus and the B bus are switched and the sounds of the A bus and the B bus are switched by directly controlling the video-system block 102 and the audio-system block 103.

When the edit processing is carried out on the basis of the data stored in the memory 62, a reproducing time of the reproducing-side VTR 1 or 2 and a recording timing of the recording-side VTR 6 are controlled from the sub controller 61 through the system controller 60. Thus, the reproduction and the recording have to be controlled with high accuracy.

By using the editing apparatus according to the embodiment of the present invention, it is possible to carry out the editing processing with high accuracy. Specifically, since the video editing apparatus is comprised of an effector unit for adding a video special effect to the video signal supplied thereto, the switcher unit for switching a plurality of input video signals, the audio mixer unit for changing the mixed state of a plurality of input audio signals and the edit controller unit for controlling operation of the connected VTRs integrally formed thereon, the edit control on the respective portions based on the operation of the operation key 101 of this editing apparatus can be directly effected on respective portions by the sub controller 61. At the same time, it becomes possible to transmit the control instruction to the respective portions. Therefore, edit processings in all circuits can be carried out without a delay of time, i.e., ± 0 frame. Thus, it becomes possible to carry out the editing with high accuracy.

Particularly, when the cue is memorized in the memory 62 and the editing is carried out, it is determined by the sub controller 61 which directly controls the respective circuits by directly comparing the time codes of the cue and the current time codes of the VTRs whether or not the time code becomes the cue. Then, the respective circuits are controlled. It becomes possible to carry out the editing with high accuracy of one frame unit.

According to the embodiment of the present invention, since the time base of the video signal processed by this editing apparatus is corrected by the frame memories 44, 55 which carry out the effect processing of the video signals and the peripheral circuits, the video signal with accurate time base is output as the video signal processed by this editing apparatus, the time base need not be corrected by the VTR side connected to the editing apparatus and a VTR of simplified arrangement having no time base corrector can be used as the reproducing side VTRS 1 and 2. In this case, since the frame memories 44, 55 which carry out the effect processing correct the time base, a circuit exclusively designed for time base correction need not be provided. Thus, it is possible to obtain a video signal with accurate time base without increasing the circuit scale.

While the time codes supplied from the respective VTRs and the time codes stored are compared with each other as described above, if there cannot be obtained continuous time codes from the VTR, then the editing apparatus includes time code generating means and time codes from the time code generating means and the time codes stored in the memory are compared and then the edit can be controlled.

While the A bus and the B bus include the effect processing units formed of frame memories 44, 55 or the like as the processing of the video system as described above, the present invention is not limited thereto and any one of the systems may include the frame memory and the effect processing can be carried out only by one system.

While the editing apparatus is constructed as the editing system using the two reproducing-side VTRs and the recording VTR as described above, the present invention is not limited thereto and it is possible to increase the number of the reproducing-side VTR and the recording-side VTR. Further, it is possible to use a video recording apparatus and a video reproducing apparatus (e.g., recording and reproducing apparatus using a videotex as a recording medium) other than the VTR.

Having described a preferred embodiment of the invention with reference to the accompanying drawings, it is to be understood that the invention is not limited to that precise embodiment and that various changes and modifications could be effected therein by one skilled in the art without departing from the scope of the invention as defined in the appended claims.

## Claims

1. A video/audio signal processing apparatus for processing a first source analog video signal and a second source analog video signal and a plurality of audio input signals, the apparatus comprising:
an analog to digital conversion means (43, 53) operable to convert said first source analog video signal and said second source analog video signal into a digital representation to produce a first source digital video signal and a second source digital video signal respectively;
a first effect processing means (44) for performing a first special effect process to said first source digital video signal to generate a first processed digital video signal in response to a first effecting control signal that controls a timing of said first special effect process;
a second effect processing means (54) for performing a second special effect process to said second source digital video signal to generate a second processed digital video signal in response to a second effecting control signal that controls a timing of said second special effect process;
a digital to analog conversion means (45, 55) operable to convert said first processed digital video signal and said second processed digital video signal into an analog representation to produce a first processed analog video signal and a second processed analog video signal respectively;
a switching means (33) for switching said first processed analog video signal and said second processed analog video signal;
an audio mixing means for mixing and outputting audio signals selected from said audio input signals;
a memory means (62) for storing a plurality of edit processing data indicating a timing of said first special effect process and said second special effect process; and
a control means (60, 61) for controlling said first effect processing means, said second effect processing means, said switching means and said audio mixing means, wherein said control means comprises:
a) receiving means (104) for receiving a first source time code information corresponding to said first source video signal, a second source time code information corresponding to said second source video signal, and said plurality of edit processing data; and
b) generating means for generating said first effecting control signal at the time of matching with said first source time code information and said edit processing data indicating a timing of said first effect process, and said second effecting control signal at the time of matching with said second source time code information and said edit processing data indicating a timing of said second effect process.

2. An apparatus according to claim 1, comprising a video special effect processor (34) operable to detect a colour component from said first processed analog video signal or said second processed analog video signal supplied thereto and to change said colour component in a processed analog video signal supplied therefrom.

3. An apparatus according to claim 1 or claim 2, wherein said first effect processing means (44) and said second effect processing means (54) are operable to separate a picture into a plurality of pictures and to form a mosaic picture.

4. An apparatus according to claim 1, wherein said control means (60, 61) is operable to select from a plurality of input channels said first source analog video signal and said second source analog video signal.

5. An apparatus according to any one of the above claims wherein said memory means (62) is operable to store edit processing data indicating a timing for switching.

6. An apparatus according to claim 5, wherein said generating means is operable to generate said switching control signal based on said first and/or second source time code information and said edit processing data indicating a timing for said switching.

7. An apparatus according to claim 5, wherein said generating means is operable to generate said switching control signal at the timing of matching with said source time code information and said edit processing data indicating a timing for said switching.

8. An apparatus according to any preceding claim wherein said first processing means (44), second processing means (54), switching means (33), memory means (62), control means (60, 61), analog to digital conversion means (43, 53) and digital to analog conversion means (45,55) are all provided in the same housing.

## Patentansprüche

1. Video-/Audiosignal-Verarbeitungsgerät zum Bearbeiten eines analogen Videosignals einer ersten Quelle und eines analogen Videosignal einer zweiten Quelle und von mehreren Eingangsaudiosignalen, wobei das Gerät aufweist:
eine Analog-Digital-Umsetzungseinrichtung (43, 53), die betreibbar ist, das analoge Videosignal der ersten Quelle und das analoge Videosignal der zweiten Quelle in eine digitale Darstellung umzusetzen, um ein digitales Videosignal der ersten Quelle bzw. ein digitales Videosignal der zweiten Quelle zu erzeugen;
eine erste Effektverarbeitungseinrichtung (44), um einen ersten Spezialeffektprozeß in bezug auf das digitale Videosignal der ersten Quelle durchzuführen, um ein erstes bearbeitetes digitales Videosignal als Antwort auf ein erstes Effektsteuersignal zu erzeugen, welches eine Zeitsteuerung des ersten Spezialeffektprozesses steuert;
eine zweite Effektverarbeitungseinrichtung (54), um einen zweiten Spezialeffektprozeß in bezug auf das digitale Videosignal der zweiten Quelle durchzuführen, um ein zweites bearbeitetes digitales Videosignal als Antwort auf ein zweites Effektsteuersignal zu erzeugen, welches eine zeitliche Abstimmung des zweiten Spezialeffektprozesses steuert;
eine Digital-Analog-Umsetzungseinrichtung (45, 55), die betreibbar ist, das erste bearbeitete digitale Videosignal und das zweite bearbeitete digitale Videosignal in eine analoge Darstellung umzusetzen, um ein erstes bearbeitetes analoges Videosignal bzw. ein zweites bearbeitetes analoges Videosignal zu erzeugen;
eine Schalteinrichtung (33), um das erste bearbeitete analoge Videosignal und das zweite bearbeitete analoge Videosignal zu schalten;
eine Audiomischeinrichtung, um Audiosignale, die von den Audioeingangssignalen ausgewählt werden, zu mischen und auszugeben;
eine Speichereinrichtung (62), um mehrere Editierprozeßdaten zu speichern, die eine zeitliche Abstimmung des ersten Spezialeffektprozesses und des zweiten Spezialeffektprozesses zeigen; und
eine Steuereinrichtung (60, 61), um die erste Effektverarbeitungseinrichtung, die zweite Effektverarbeitungseinrichtung, die Schalteinrichtung und die Audiomischeinrichtung zu steuern, wobei die Steuereinrichtung aufweist:
a) eine Empfangseinrichtung (104), um eine Zeitcodeinformation der ersten Quelle entsprechend dem Videosignal der ersten Quelle, eine Zeitcodeinformation der zweiten Quelle entsprechend dem Videosignal der zweiten Quelle und die mehreren Editierverarbeitungsdaten zu empfangen; und
b) eine Erzeugungseinrichtung, um das erste Effektsteuersignal im Zeitpunkt der Übereinstimmung der Zeitcodeinformation der ersten Quelle und der Editierverarbeitungsdaten, die eine zeitliche Abstimmung des ersten Effektprozesses zeigen, und um das zweite Effektsteuersignal im Zeitpunkt der Übereinstimmung der Zeitcodeinformation der zweiten Quelle und der Editierverarbeitungsdaten, die eine zeitliche Abstimmung des zweiten Effektprozesses zeigen, zu erzeugen.

2. Gerät nach Anspruch 1, welches einen Videospezial-Effektprozessor (34) aufweist, der betreibbar ist, eine Farbkomponente vom ersten verarbeiteten analogen Videosignal oder vom zweiten verarbeiteten analogen Videosignal zu ermitteln, welches zugeführt wird, und um diese Farbkomponente in einem verarbeiteten analogen Videosignal, welches abgegeben wird, zu ändern.

3. Gerät nach Anspruch 1 oder 2, wobei die erste Effektverarbeitungseinrichtung (44) und die zweite Effektverarbeitungseinrichtung (54) betreibbar sind, ein Bild in mehrere Bilder zu trennen und ein Mosaikbild zu bilden.

4. Gerät nach Anspruch 1, wobei die Steuereinrichtung (60, 61) betreibbar ist, um aus mehreren Eingangskanälen das analoge Videosignal der ersten Quelle und das analoge Videosignal der zweiten Quelle auszuwählen.

5. Gerät nach einem der vorhergehenden Ansprüche, wobei die Speichereinrichtung (62) betreibbar ist, Editierverarbeitungsdaten zu speichern, die eine zeitliche Abstimmung zum Schalten zeigen.

6. Gerät nach Anspruch 5, wobei die Erzeugungseinrichtung betreibbar ist, das Schaltsteuersignal auf der Basis der Zeitcodeinformation der ersten und/oder der zweiten Quelle und der Editierverarbeitungsdaten, die eine zeitliche Abstimmung für das Schalten zeigen, zu erzeugen.

7. Gerät nach Anspruch 5, wobei die Erzeugungseinrichtung betreibbar ist, das Schaltsteuersignal im Zeitpunkt der Übereinstimmung mit der Zeitcodeinformation der Quelle und der Editierverarbeitungsdaten, die eine zeitliche Abstimmung für das Schalten zeigen, zu erzeugen.

8. Gerät nach einem der vorhergehenden Ansprüche, wobei die erste Verarbeitungseinrichtung (44), die zweite Verarbeitungseinrichtung (54), die Schalteinrichtung (33), die Speichereinrichtung (62), die Steuereinrichtung (60, 61), die Analog-Digital-Umsetzungseinrichtung (43, 53) und die Digital-Analog-Umsetzungseinrichtung (45, 55) im gleichen Gehäuse angeordnet sind.

## Revendications

1. Dispositif de traitement de signaux vidéo/audio pour le traitement d'un premier signal vidéo analogique source et d'un second signal vidéo source et une pluralité de signaux d'entrée audio, le dispositif comprenant:
des moyens de conversion analogique/numérique (43, 45) pouvant agir de manière à convertir ledit premier signal vidéo analogique source et ledit second signal vidéo analogique source en une représentation numérique pour produire respectivement un premier signal vidéo numérique source à un second signal vidéo numérique source;
des premiers moyens (44) de traitement produisant un effet pour appliquer un premier traitement produisant un effet spécial audit premier signal vidéo numérique source afin de produire un premier signal vidéo numérique traité en réponse à un premier signal de commande d'exécution, qui commande à un cadencement dudit premier traitement produisant un effet spécial;
des moyens (54) de traitement produisant un second effet pour appliquer un second traitement produisant un effet spécial audit second signal vidéo numérique source pour produire un second signal vidéo numérique traité en réponse à un second signal de commande d'exécution qui commande un cadencement dudit second traitement produisant un effet spécial;
des moyens de conversion numérique/analogique (45, 55) pouvant agir de manière à convertir ledit premier signal vidéo numérique traité et ledit second signal vidéo numérique traité en une représentation analogique pour produire respectivement un premier signal vidéo analogique traité et un second signal vidéo analogique traité;
des moyens de commutation (33) pour commuter ledit premier signal vidéo analogique traité et ledit second signal vidéo analogique traité;
des moyens de mélange audio pour mélanger et délivrer des signaux audio sélectionnés à partir desdits signaux audio d'entrée;
des moyens de mémoire (62) pour mémoriser une pluralité de données de traitement d'édition indiquant un cadencement dudit premier traitement produisant un effet spécial et dudit second traitement produisant un effet spécial; et
des moyens de commande (60, 61) pour commander lesdits premiers moyens de traitement produisant un effet, lesdits seconds moyens de traitement produisant un effet, lesdits moyens de commutation et lesdits moyens de mélange audio,
lesdits moyens de commande comprenant:
a) des moyens de réception (104) pour recevoir une première information de code de temps source correspondant audit premier signal vidéo source, une seconde information de code de temps source correspondant audit second signal vidéo source et ladite pluralité de données de traitement d'édition; et
b) des moyens générateurs pour générer ledit premier signal de commande d'exécution à l'instant de mise en correspondance avec ladite première information de code de temps source, et lesdites données de traitement d'édition indiquant un cadencement dudit premier traitement produisant un effet, et ledit second signal de commande d'exécution au moment de la mise en correspondance avec ladite seconde formation de code de temps source et lesdites données de traitement d'édition indiquant un cadencement dudit second traitement produisant un effet.

2. Dispositif selon la revendication 1, comprenant un processeur vidéo de production d'un effet spécial (34) pouvant agir de manière à détecter une composante de couleur à partir dudit premier signal vidéo analogique traité ou dudit second signal vidéo analogique traité, qui lui sont envoyés, et pour modifier ladite composante de couleur dans un signal vidéo analogique traité, qui lui est envoyé.

3. Dispositif selon la revendication 1 ou la revendication 2, dans lequel lesdits premiers moyens de traitement (44) produisant un effet et lesdits seconds moyens de traitement (54) produisant un effet peuvent agir de manière à diviser une image en une pluralité d'images et former une image mosaïque.

4. Dispositif selon la revendication 1, dans lequel lesdits moyens de commande (60, 61) peuvent agir pour sélectionner, parmi une pluralité de canaux d'entrée, ledit premier signal vidéo analogique source et ledit second signal vidéo analogique source.

5. Dispositif selon l'une quelconque des revendications précédentes, dans lequel lesdits moyens de mémoire (62) peuvent agir de manière à mémoriser des données de traitement d'édition indiquant un cadencement pour la commutation.

6. Dispositif selon la revendication 5, dans lequel lesdits moyens générateurs peuvent agir de manière à produire ledit signal de commutation sur la base de ladite première et/ou seconde information de code de temps source et lesdites données de traitement indiquant un cadencement pour ladite commutation.

7. Dispositif selon la revendication 5, dans lequel lesdits moyens générateurs peuvent agir de manière à produire ledit signal de commande de commutation à l'instant de la mise en concordance avec ladite information de code de temps source et lesdites données de traitement d'édition indiquant un instant pour ladite commutation.

8. Dispositif selon l'une quelconque des revendications précédentes, dans lequel lesdits premiers moyens de traitement (44), lesdits seconds moyens de traitement (54), lesdits moyens de commutation (33), lesdits moyens de mémoire (62), lesdits moyens de commande (60, 61), lesdits moyens de conversion analogique/numérique (43, 53) et lesdits moyens de conversion numérique/analogique (45, 55) sont tous prévus dans le même boîtier.
